# EUROPEAN PATENT APPLICATION

(11) **EP 2 680 119 A2**
(43) Date of publication of application: **01.01.2014**
(21) Application number: 13305873.5
(22) Date of filing: 25.06.2013
(51) Int. Cl.: G06F 3/0486, G06F 3/0488

(54) **Enhanced user interface to suspend a drag and drop operation**

(30) Priority: 28.06.2012 US 201261665508 P
(71) Applicant: Orange, 75015 Paris (FR)
(72) Inventor: Briand, Hyacinthe, SAN FRANCISCO, CA California CA 94115 (US)

(57) **Abstract**

The present invention relates to a method for sharing a media content displayed in a window of the touch input interface of a first electronic device with at least one second electronic device, said first electronic device comprising a processor controlling said touch input interface, the method being carried out by said processor and comprising the acts of enabling the displacement of the window responsive to the capture of a first touch input indicative of the initiation of the transfer, capturing a continuous touch input across the interface from an initial position in the window, displacing the window with each additional touch input of the continuous touch input, sending an activation message that the media content is to be played on the second device when determining that the window is within a given distance of a virtual representation of the second electronic device on the interface..

## Description

### FIELD OF THE PRESENT SYSTEM:

The present invention generally relates to mobile devices or handsets, and more specifically to mobile devices handling touch based inputs.

### BACKGROUND OF THE PRESENT SYSTEM:

Mobile handsets have an inherently impoverished graphical user interface (GUI) with respect to desktop computers. Small screens and tiny keyboards are typical of mobile handsets that fit in your pocket. Recent so called smart phones have introduced the use of a touch screen in an attempt to simplify the user experience with his mobile handset. For instance, the touch interface of the iPhone® has revolutionized the mobile handset industry and brought whole new mobile user experiences.

In existing smart phones, application programs (AP) may be controlled using touch inputs. Different touch inputs may control the AP in different ways. For instance, a user touching an AP icon will cause a control of the desktop GUI that will launch the AP corresponding to the touched icon. The desktop GUI of the iPhone™ comprising a plurality of AP icons may be seen as an AP itself. A sliding motion across the desktop GUI, or a drag touch input, will cause another control of the desktop GUI, like displaying another set of AP icons hidden so far. The user gets a feeling that he is browsing through pages of AP icons to select an interesting application program.

The new smartphones or even pads, like the Apple™ or Samsung™ tablets, are now capable of functions far beyond simple phone services. They can include media playing and recording, web browsing, games ...

Among media applications, it is possible now to play media like videos or music with these devices. The media content can be local or streamed over a data connection from a media server.

Smart phones are just one of many devices available today to a user. Other devices like music players, TVs, computers, pads ... can also play media content. Indeed, the emergence of connected devices has extended the realm of the possible when it comes for the user to interact with and share a media content. This creates the opportunity for a variety of players (manufacturers, pay-TV operators, Internet companies, telecom operators ... ) to offer multi-screens solutions between devices.

Sharing solutions are now readily available to distribute the media content among the different user devices. A user for instance can send a picture from one smartphone to another target smartphone provided they both host the same sharing application. To do so the devices are paired and the user has the feeling that he is actually displacing the picture from one device to the other by simply sliding the picture with his finger in the direction of the receiving device.

Other solutions are available for videos played for instance on a tablet. Apple Airplay® is a solution proposed for local media content. A user may start viewing with a device like a smartphone or tablet a media content local to that device. He can then activate a popup menu listing different alternative target display devices, paired beforehand. Upon selection of one of them, the local content will be streamed through a home network from the viewing device to the selected target device.

Google Fling® offers a similar user's experience. Another solution is proposed by Snapstick™. It consists in browsing a catalog of different videos, and upon selection of one of them (an activation of a transfer), the user can shake his device and the selected video is streamed directly to another predefined device.

FIGs. 4A to 4C is an illustration of a known sharing method as disclosed in patent application US13/434,384 from the same Applicant. A GUI of a sharing application is disclosed in FIG. 4A wherein the icon of a media content 410 may be dragged and dropped onto one of the target icons 401 to 403. Such an operation will cause the mobile device displaying the GUI to transfer the corresponding media content to the end point represented by the selected target icon.

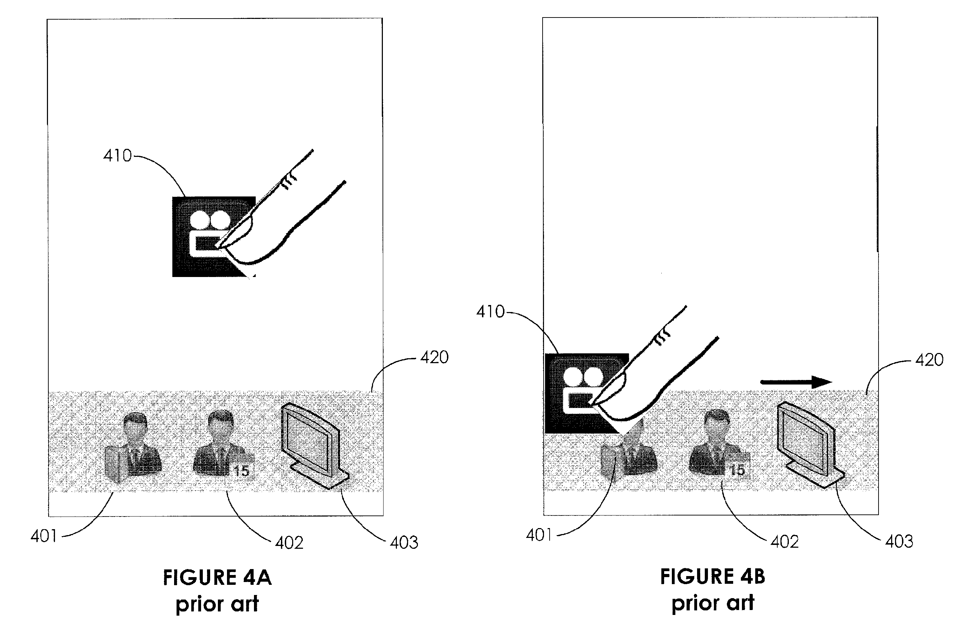

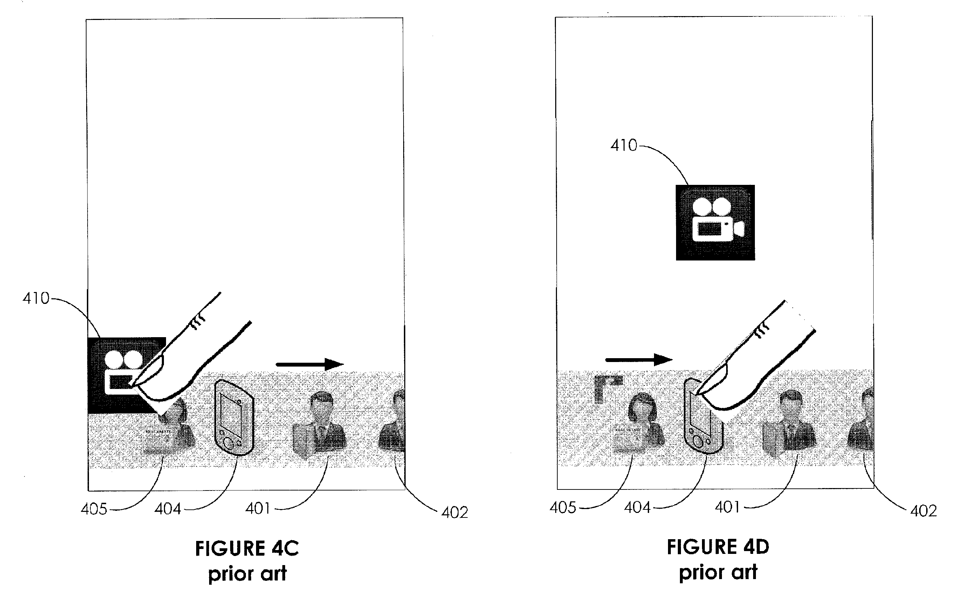

As GUIs of smart phones still have limited sizes, only a small number of target icons may be represented. In the illustration of FIGs. 4A to 4C, more target icons are accessible through a sliding - or scrowling - bar 420. Such a sliding bar or element 420 is for instance known from the iPhone Operating System that allows a user to access the icons of the running applications in a sliding element through a double touch input on the command button. The hidden target icons of the sliding bar 420 may be accessed today in two different ways:
- a sliding of the bar to the left or to the right using a touch input from the user till the right target icon appears. To do so, prior to initiating a drag and drop, the user may touch the sliding element 420 from its initial position in FIG. 4A, where only target icons 401 to 403 are visible, and slide it, e.g. to the right, to reveal further target icons 404 and 405 as seen in FIG. 4D. The target icons visible prior to the sliding will disseapear to the right (in FIG. 4D target icon 403 gone and 402 partially hidden) as new icons appears (404 and 405). The user then can perform the drag and drop operation onto one of the newly appeared icons, say target icon 405,
- a drag of the media content icon 410 to the left or to the right of the sliding element 420 as seen in FIG. 4B from the initial position of FIG. 4A. Maintaining the dragged media content icon 410 to the left edge of the sliding element and GUI will cause the sliding element to automatically move to the right. This is illustrated in FIG. 4B, where the sliding element 420 reveals undisclosed target icons 404 and 405 as it shifts to the right, while the formerly visible icons, e.g. 401 and 402, are progressively hidden. Once the right target icon appears, here target icon 404 for instance, the user can resume the drag and drop onto the selected icon 404, as seen in FIG. 4C.

The latter solution is also know from mail software GUIs such as Microsoft Outlook™. When a user drags and drops an email from his mail box onto an archive icon, he will have to force the sliding/scrowling of the archive bar when he realizes that the target archive icon is not currently displayed on the Outlook™ interface.

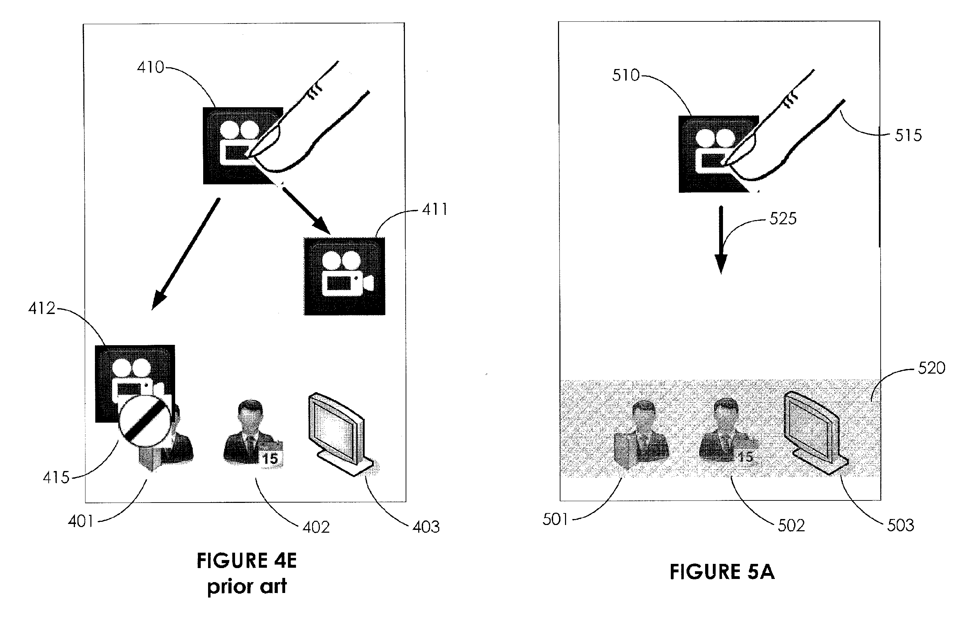

Another known solution is the Windows™ desktop, where a user can either move an icon to any free location in the desktop or drag and drop the icon onto other icons. Such an interface is illustrated in FIG. 4E, where the user can either displace (i.e. drag and drop) the media content icon 410 in a first direction towards a free position 411 in the desktop GUI. The position 411 does not correspond to any potential drop target icon for the media content icon 410. Nevertheless it can still be the target of a drop in the Windows™ desktop approach as a drop is authorized at that location. Consequently, the icon 410 will remain in its new position. Furthermore, when the media content icon is moved to a second position 412, where it overlaps target icon 401, the drop may cause the media content icon 410 to return to its initial position prior to the drop. Indeed this may happen when the drop is not allowed, e.g. the media content is not compatible with the target icon 401. A visual feeback 415, here a wrong way sign, may even be provided on the GUI to show incompatibility when the user tries to drag icon 410 on top of target icon 401.

The existing solutions have in common that either the user knows what he needs to do prior to the drag and drop operation, or, when the drag is started, he must hold the drag till some visual feedback from the GUI (the sliding, the wrong way sign) gives him some further information. For instance, he may have to hold the dragged element (like in FIG. 4B) till the sliding bar reveals the right target icon. When the sliding bar is of considerable length, like for instance with the Outlook™ archive example, the process can be cumbersome.

Today there is still a need to an improved drag and drop operation in the context of a sliding element. There is a further need for a simplified drag and drop solution that does not force the user to either anticipate his actions or cause him to unnecessarily prolong the drag for an undue duration.

### SUMMARY OF THE PRESENT SYSTEM:

It is an object of the present system to overcome disadvantages and/or make improvements in the prior art.

The present system relates to a method for dragging and dropping an icon within a graphical user interface (GUI), the GUI comprising at least graphical areas of two types:
- a first type of graphical area where a drop is enabled,
- a second type of graphical area where a drop is not enabled,
the method comprising, after detection of a drag input on the icon from the user causing the icon to be displaced in the GUI with said drag input:
- detecting discontinuity of the drag input,
- determining the icon current location in the GUI at the moment the discontinuity occurred,
- maintaining the icon current location if the discontinuity location belongs to a graphical area of the second type.

Thanks to the present method, the user can interrupt the drag operation in areas where, with existing solutions, a drop would not be enabled. As the dragged icon will remain in the position where the drag was discontinued, after interruption of the drag, the icon will appear on the GUI as if suspended, i.e. in a third state: neither dragged, nor dropped. Normal behavior is not altered as if the drag is interrupted over an area where a drop is enabled (graphical area of the first type), the drop will be carried out as in existing solutions.

The present system also relates to an electronic device electronic device for for dragging and dropping an icon within a graphical user interface (GUI) rendered on said electronic device, the GUI comprising at least graphical areas of two types:
- a first type of graphical area where a drop is enabled,
- a second type of graphical area where a drop is not enabled,
the electronic device being arranged, after detection of a drag input on the icon from the user causing the icon to be displaced in the GUI with said drag input, to:
- detect discontinuity of the drag input,
- determine the icon current location in the GUI at the moment the discontinuity occurred,
- maintain the icon current location if the discontinuity location belongs to a graphical area of the second type.

The present system also relates to an application embodied on a non transitory computer readable storage medium and executable by an electronic device in the form of a software agent including at least one software module setup to drag and drop an icon within a graphical user interface (GUI) of the electronic device, the GUI comprising at least graphical areas of two types:
- a first type of graphical area where a drop is enabled,
- a second type of graphical area where a drop is not enabled,
the application comprising instructions, after detection of a drag input on the icon from the user causing the icon to be displaced in the GUI with said drag input, to:
- detect discontinuity of the drag input,
- determine the icon current location in the GUI at the moment the discontinuity occurred,
- maintain the icon current location if the discontinuity location belongs to a graphical area of the second type.

### BRIEF DESCRIPTION OF THE DRAWINGS:

The invention is explained in further detail, and by way of example, with reference to the accompanying drawings wherein:
FIG. 1 shows a mobile device in accordance with an embodiment of the present system;
FIG. 2A shows an illustration of a first embodiment of the present system;
FIG. 2B shows an illustration of a second embodiment of the present system;
FIG. 2C shows an illustration of a third embodiment of the present system;
FIG. 3, shows an exemplary flowchart in accordance with an embodiment of the present system;
FIGs. 4A-4D show exemplary illustrations of the GUI according to known drag and drop techniques; and,
FIGs. 4E-4G show exemplary illustrations of the GUI according to another embodiment of the present system;

### DETAILED DESCRIPTION OF THE PRESENT SYSTEM:

The following are descriptions of illustrative embodiments that when taken in conjunction with the following drawings will demonstrate the above noted features and advantages, as well as further ones. In the following description, for purposes of explanation rather than limitation, illustrative details are set forth such as architecture, interfaces, techniques, element attributes, etc. However, it will be apparent to those of ordinary skill in the art that other embodiments that depart from these details would still be understood to be within the scope of the appended claims. Moreover, for the purpose of clarity, detailed descriptions of well known devices, circuits, tools, techniques and methods are omitted so as not to obscure the description of the present system. It should be expressly understood that the drawings are included for illustrative purposes and do not represent the scope of the present system. In the accompanying drawings, like reference numbers in different drawings may designate similar elements.

For purposes of simplifying a description of the present system, the terms "operatively coupled", "coupled" and formatives thereof as utilized herein refer to a connection between devices and/or portions thereof that enables operation in accordance with the present system. For example, an operative coupling may include one or more of a wired connection and/or a wireless connection between two or more devices that enables a one and/or two-way communication path between the devices and/or portions thereof. An operative coupling may also include a wired and/or wireless coupling to enable communication between a media content platform and one or more user devices in accordance with an embodiment of the present system. An operative coupling may also relate to an interaction between program portions and thereby may not describe a physical connection so much as an interaction based coupling.

The term rendering and formatives thereof as utilized herein refer to providing content, such as digital media or a graphical user interface (GUI), such that it may be perceived by at least one user sense, such as a sense of sight and/or a sense of hearing. For example, the present system may render a user interface on a display device so that it may be seen and interacted with by a user. The term rendering may also comprise all the actions required to generate a GUI prior to the display, like e.g. a map representation generated on a server side for a browser application on a user device.

The system, device(s), method, user interface, etc., described herein address problems in prior art systems. The man skilled in the art may easily apply the present teachings to any electronic device presenting a touch sensitive panel, (referred also hereafter as a touch sensitive display or screen), a pointing device (like a mouse) or a keyboard.

In accordance with an embodiment of the present system, an electronic device provides a GUI for controlling an application program (AP) through user inputs, such e.g. as touch or mouse inputs. In the description hereafter, reference will be made to a mobile device or handsets.

A graphical user interface (GUI) may be provided in accordance with an embodiment of the present system:
- by an application program running locally on a device processor, such as part of a computer system of a mobile device, and/or,
- as provided by a network connected device or web based server, such as a media content server providing media content to the user device, the GUI being rendered on user device through a local application program (e.g. a browser) connected to media content server.

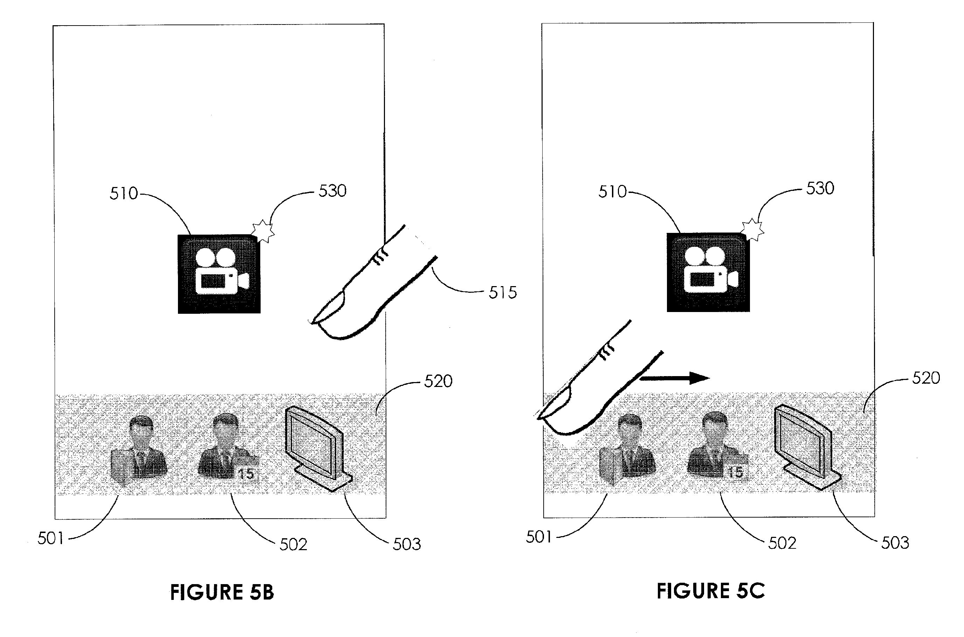

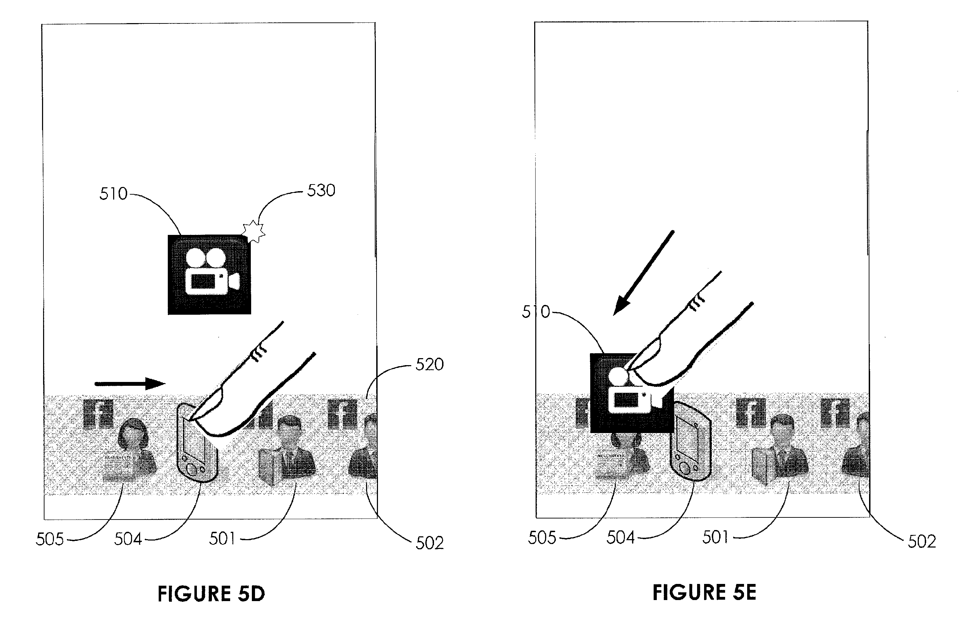

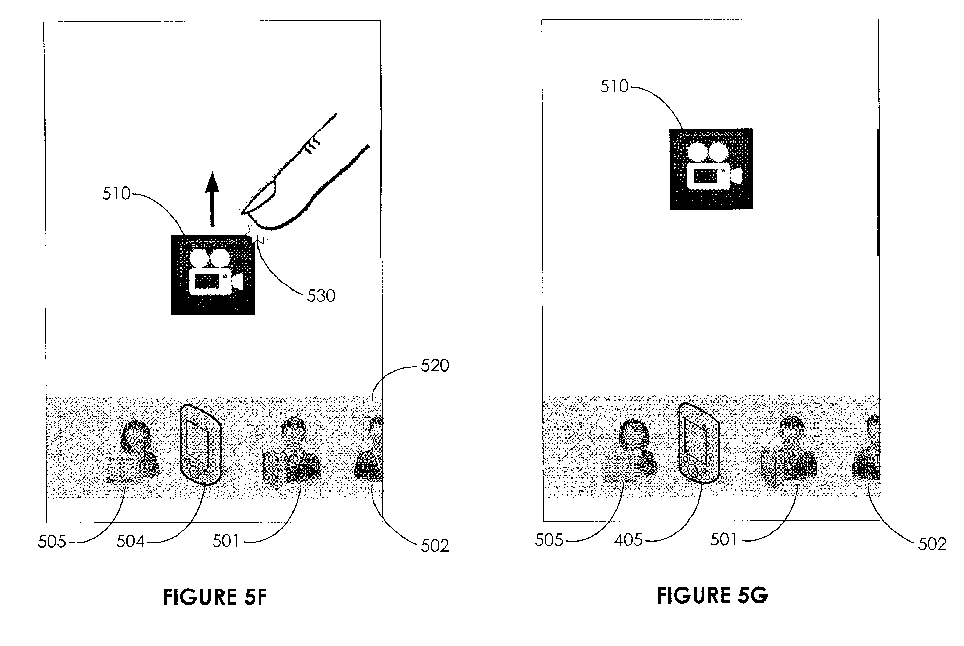

For instance, the present GUI enabling a swoop transfer (as explained later on) of a displayed media content may be generated locally by a swoop application or rendered by a local AP connected to a server providing the GUI elements. The provided visual environment may be displayed by the processor on a display device of the user device, e.g. a touch sensitive panel (touch panel in short), which a user may use to provide a number of touch inputs of different types. Furthermore, the GUIs of the embodiment illustrated in FIGs. 5 may be generated and rendered by a local AP or genered remotely on a network connected server and rendered on a browser AP.

A GUI is a type of user interface which allows a user to interact with electronic devices such as computers, hand-held devices such as smartphones ot tablets, household appliances, office equipment and the likes. GUIs are typically used to render visual and textual images which describe various visual metaphors of an operating system, an application, etc., and implemented on a processor/computer including rendering on a display device. Furthermore, GUIs can represent programs, files and operational functions with graphical images, objects, or vector representations. The graphical images can include windows, fields, dialog boxes, menus, icons, buttons, cursors, scroll bars, maps, etc. Such images can be arranged in predefined layouts, or can be created dynamically (by the device itself or by a web-based server) to serve the specific actions being taken by a user. In general, the user can select and/or activate various graphical images in order to initiate functions and tasks, i.e. controls, associated therewith. By way of example, a user can select a button that opens, closes, minimizes, or maximizes a window, a virtual representation or an icon that launches a particular application program. By way of another example, the GUI may present a typical user interface including a windowing environment and as such, may include menu items, pull-down menu items, icons, pop-up windows, etc., that are typical of those provided in a windowing environment, such as may be represented within a Windows™ Operating System GUI as provided by Microsoft Corporation and/or an OS X™ Operating System GUI, such as provided on an iPhone™, MacBook™, iMac™, etc., as provided by Apple, Inc., and/or another operating system (OS).

In the description here after, an application program (AP) - or software - may be seen as any tool that functions and is operated by means of a computer, with the purpose of performing one or more functions or tasks for a user or another application program. To interact with and control an AP, a GUI of the AP may be displayed on the user device display.

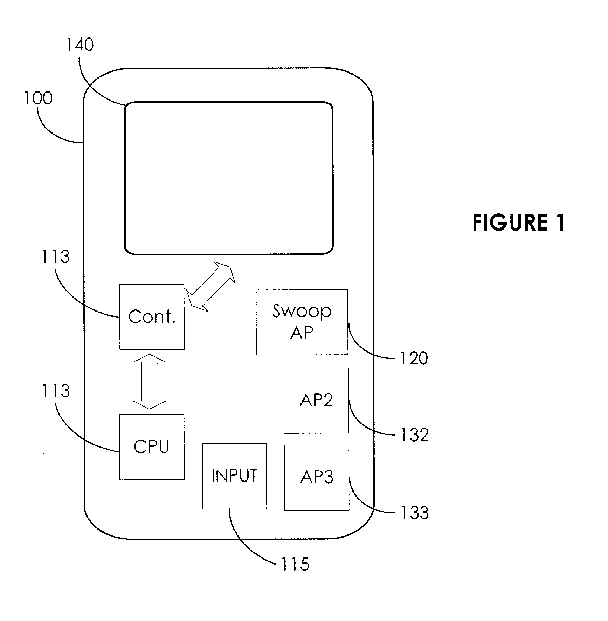

FIG. 1 is an illustration of an exemplary user device 100 used in the present system. In the here after description, the user or electronic device will illustrated as a mobile device 100 with a touch interface. This illustration is in no way limiting as the present teaching would work for any user devices such as laptops, pads, desktops and the likes, enabling the user to interact through a touch interface, a poiting device and/or a keyboard. The mobile device 100 comprises a display device 140, a processor 110, a controller 113 of the display device, and an input device 115.

In the present system, the user interaction with and manipulation of the application program rendered on a GUI is achieved using the display device 140, or screen, which is presently a touch panel operationally coupled to the processor 112 controlling the displayed interface.

Processor 110 may control the rendering and/or the display of the GUI on the display device 140 depending on the type of application program, i.e. resident or web-based. Processor 110 may also handle the user entries according to the present method. The user entries to interact with an application program may be provided through interactions with the touch panel 140.

The touch panel 140 can be seen as an input device allowing interactions with a finger of a user or other devices such as a stylus. Touch sensor interface or touch panel 140 may include any suitable circuitry to convert analog signals corresponding to touch input received over its surface into any suitable digital touch input data. Such touch input data can, for example, be used to make selections of portions of the GUI of an AP or displace windows as explained here after. The input received from a user's touch is sent to the processor 110. The touch panel 140 is configured to detect and report the (location of the) touches to the processor 110, which can interpret the touches in accordance with the application program and the currently displayed GUI. For example, the processor 110 can initiate a task, e.g. a control of the AP or sent an activation message that the media content currently displayed is to be played on a second display device, subsequent to a given touch input.

The controller 113, e.g. a dedicated processor, may be provided to process input touches locally and reduce demand for the main processor 110 of the mobile device. The touch panel 140 can be based on sensing technologies including but not limited to capacitive sensing, resistive sensing, surface acoustic wave sensing, pressure sensing, optical sensing, and/or the likes. Here after, for simplification purpose, reference will be made to a finger of the user touching panel 140, other devices such as a stylus may be used in place of the user finger.

In the present system, a number of different applications may be provided with the mobile device 100, like AP2 132 and AP3 133. A swoop application 120 may be further provided to enable the present method.

The term swoop will be used here after to refer to the act and process of using an intuitive gesture on a first electronic device (e.g. mobile device, tablet ...) to send an asset or media content being experienced on said first electronic device (e.g. video, photo, music ...) to an end point like a second electronic device (e.g. Roku player, connected TV, other tablet, laptop computer ...).

The intuitive gesture will be described as a continuous touch input (i.e. a drag touch input) to transfer the displayed or experienced asset to another device (e.g. through a drop). Thanks to the present method, the user can enjoy a fluid transfer by sliding or dragging the media content from a first electronic device (the swooper or swooping device) to an end point, like a recipient device, e.g. another electronic device, or a friend on a social network.. The transfer of the present system will be referred to as a swoop based transfer. The swoop based transfer, or transfer of media content in short, is just an exemplary illustration of the present drag and drop method with a suspension. It may be interesting as illustrated in FIGs 5 to allow the user to suspend the drag operation of the media content icon to interact with other functionalities of the GUI, like for instance the sliding element.

In the present context, a drag is the combined action of holding (or pressing) to grab a graphical object and pulling it to move it away from its initial screen position. The drop is the action of dropping the graphical or virtual object onto a target. Usually the user releases his (e.g. touch or mouse ) input, causing the electronic device to detect a discontinuity in the user drag input. When the release happens on a valid drop area, a subsequent action, like the transfer of the file represented by the virtual object, will be managed by the processor of the device. To determine whether a drop is enabled at the location of the drop, the processor in known drag and drop operations generally captures the location of the drop, checks for any icon or drop targets at that location and then will determine whether a drop is possible/enabled between the (file represented by the )drag object and the object of the drop.

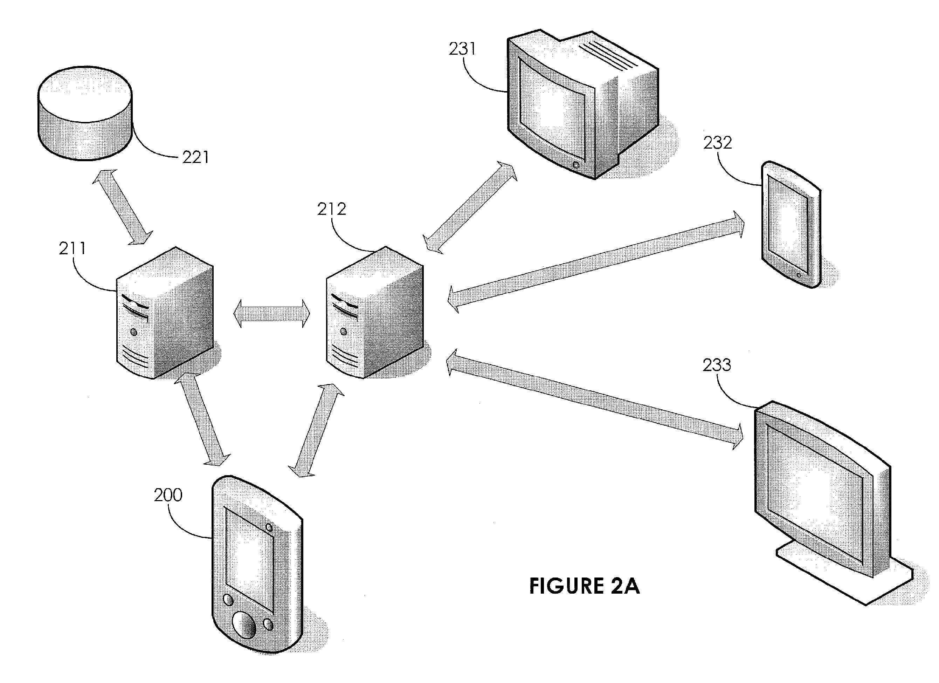

FIG. 2A is an illustration of a first embodiment of the present system with different operatively coupled devices. A mobile device 200 is configured for swooping a media content currently rendered or experienced on its touch interface. The content or asset may be browsed from a media content server 211 that distributes media content from one or more media content libraries or database 221. The browsing may be enabled in a web browser or through a web application like the swoop application 120 mentioned here before.

An interface like the one illustrated in FIG. 5A may allow the user to select different media contents from the media content database 211 available for viewing (if video content) or listening (if music). In the here after description, reference is made to media content streamed on mobile device 200 thanks to the media content server 211. The present teachings could be implemented as well for content held locally on the mobile device 200.

Thanks to the present system, a user may select an icon representation of a media content 510 with his finger 515 as shown in FIG. 5A. The selected content is available for transfert to an end point (through a drag and drop operation for instance,e.g. social network friends 501 and 502 or connected TV 503 as seen in FIG. 5A.

Referring back to FIG. 2A, a number of different display devices is available for playing the selected media content 510. In FIG. 2A, three different devices, respectively a computer screen 231, a tablet 232 and a TV screen 233 can be chosen by the user.

To that effect a queuing server 212, or swoop server, is provided in the present system to instruct the chosen display device to play the selected media content. Once a media content is selected for swooping to another display device, the swoop server 211 will receive from the mobile device 200 an activation message that the selected content is to be played on that display device.

One may note that the display devices are illustrated as hardware. This is in no way limiting as the asset may be swooped to any end point such as a software or player hosted on such electronic devices, or even a user of a social network, identified e.g. through his user name. For instance the media may be swooped to a Roku Player or a browser hosted on a personal computer. They may appear to the user as two different target displays even though hosted by the same electronic device. Additionally, the asset may be swooped to a friend on a social network, the friend's name appearing as a virtual representation on the GUI, provided the friend has accepted to become a swoopee for all assets a user may want to transfer to him.

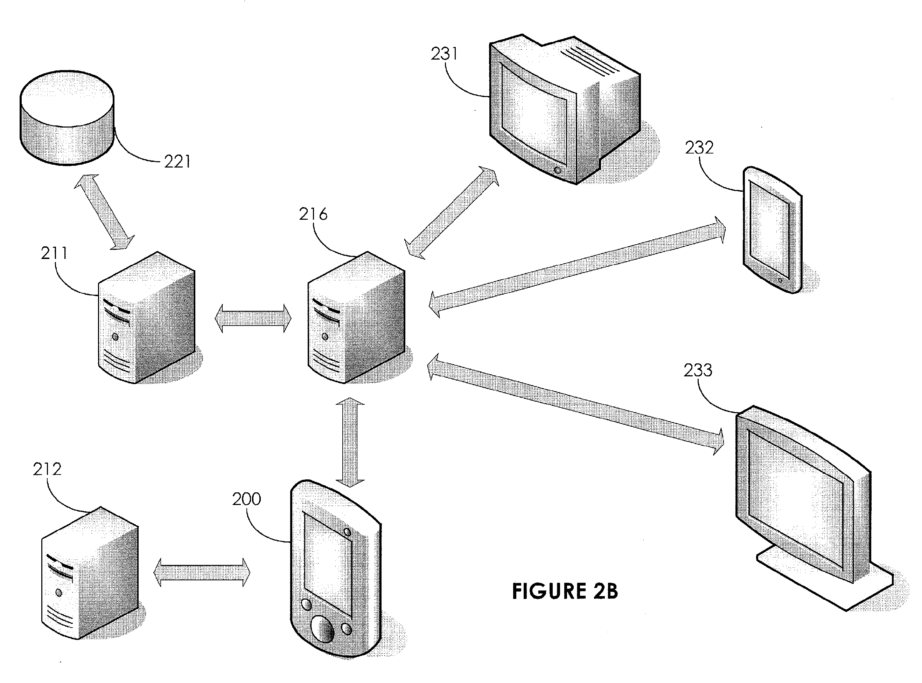

FIG. 2B is an illustration of a second embodiment of the present invention. The display devices 231 to 233 are provided, along with mobile device 200 and the media content server 211 and the one or more media content database 221. A home network is further provided through a home server 216. The different devices, including mobile device 200, may communicate with one another through a wireless protocol like a WIFI network enabled thanks to the home server 216. Mobile device 200 may also access the media content libraries 221 through the home server 216, or directly using a 3GPP connection. A swoop server 212 may also be provided for downloading the swoop application if not provided with the mobile device 200.

In the illustrative embodiments of FIGs. 2A and 2B, the mobile device 200 and the different display devices 231 to 233 are operatively coupled indirectly, either through the swoop server 212 or the home server 216.

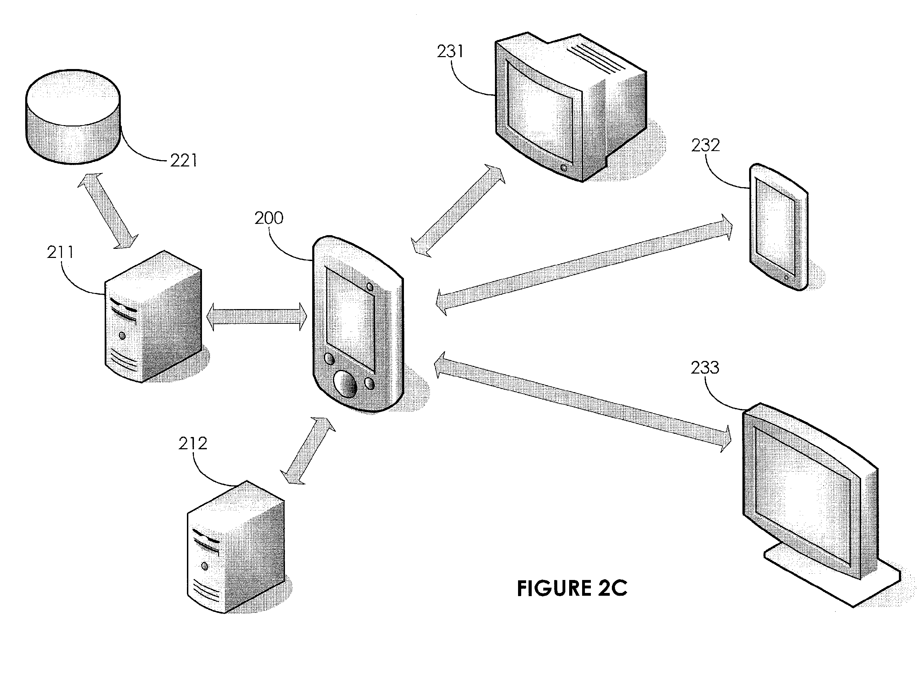

FIG. 2C is another illustration of a third embodiment of the present system. In this embodiment, mobile device 200 is paired directly, on a one on one basis, with each display device. A variety of communication bearers may be used for the direct coupling between the mobile device 200 and the display devices 321-323. Such communication bearers may include for instance NFC (near field communication) or Bluetooth. A swoop server 212 may be provided for downloading the swoop application if not provided with the mobile device 200.

Any combination of the exemplary embodiments of the present system may also be envisioned depending on how the mobile device 200 communicates - directly or indirectly - with the plurality of end points. Regardless of the chosen communication path, the swoop or transfer application present on the mobile device, or the GUI when provided by a remote server, may be arranged to perform one or more of the following:
- receive information about, e.g. register or connect with, the different display devices, or more generally end points, so as to allow the user to choose one target end point that will render the selected media content. The swoop application may even receive update status information for a swoopee, the update status information comprising an availability indication, i.e. an active or inactive status, for rendering of any swooped asset,
- connect with the media content server 211 and browse the one or more media content libraries 221 for remote content,
- display a list of media content or assets available for consumption by the user. Consumption will mean experiencing or rendering of the media content as mentioned before,
- enable selection of a media content in the list. The discovery of media content may be achieved e.g. through a search returning a hit list. This is one of many different discovery techniques as the user may simply select a media content as shown in a webpage referring to that media content,
- receive from the user a first drag input on a media content icon. Such a drag input may be seen as a continuous touch input (if a touch interface) with a displacement of the finger. Media content icons in the present system are operable to be dragged and dropped. Consequently the drag input will cause the selected media content icon to be displaced in the GUI with said drag input. In the present description, referenced is made to an icon being dragged. An icon may be defined as a (static or animated) pictogram displayed on a GUI. It is the representation of a virtual object under the form of a graphical file or element. In the present system, the media content icon may be rendered through a media player in a window or graphical element of the GUI, e.g. a widget. Such a widget may be considered as an icon itself which will be displaced as the user drags the widget towards one of the end points. Regarding the GUI update with each user input, the displacements of the icon may be configured to be of the same amplitude and in the same direction of each additional drag input provided by the user. This will give the user the impression that he is actually moving the icon or graphical element towards the target end point, as in a know drag and drop operation,
- detect discontinuity of the drag input from the user. The interruption of the drag input from the user may be an indication that either he wants to drop the icon or proceed with a suspension of the drag and drop operation according to the present system and detailed here after, In order to determine whether a suspension is requested, i.e. that the user wants to place the dragged icon in a third state (neither dragged, nor dropped), two types of graphical areas are defined in the present GUI: a first type of graphical area where a drop is enabled, and a second type of graphical area where a drop is not enabled. Provided the icon current location in the GUI at the moment the discontinuity occurred belongs to a graphical area for which or where a dropped not allowed (graphical area of the second type), the dragged icon will enter the third state, i.e. it will be maintained in its current location where the discontinuity occurred,
- associate to the icon, when suspended, a selectable graphical element, like element 530 shown in FIGs. 5, as a visual feedback to the user for the third or suspended state,
- return the icon to its initial position (i.e. cancel the suspension) when receiving a user input on the selectable element 530, i.e. a selection by the user,
- resume the displacement of the icon from its suspended state when detecting a further drag input on said icon. Thus the user can either resume the drag and drop operation by dragging the media content icon further towards the end point icons, or cancel the suspension by selecting the selectable element 530,
- enable other user inputs when the icon is in its suspended state. Indeed, during the suspended state of the icon, the GUI is configured to allow further control by the user of the GUI. For instance, he will be able to select/operate the sliding element 520 and retrieve the hidden end point icons, contrary to known techniques illustrated in FIGs. 4A-4C. To ensure that the user can resume the drag and drop operation at any time after suspension, the GUI may be configured to keep the suspended icon visible in its maintained position besides other user inputs on the GUI (apart from inputs on the selectable element 530 or the icon itself). This may be interesting when, among other user inputs, the user moves icons around the GUI or moves a sliding element, like the sliding element 520 illustrated in FIGs. 5.

Illustrating the present drag and drop suspension in the context of a transfer application is just an exemplary embodiment of the present method. The suspended state may be implemented in the context of any drag and drop operation, like the Microsoft Outlook™ context illustrated in the background of the present application. Indeed, the user in such a context could suspend a dragged email icon on his email interface, and slide the archive bar till the right archive recipient directory appears, and resume the drag and drop of the email icon from the suspended state location.

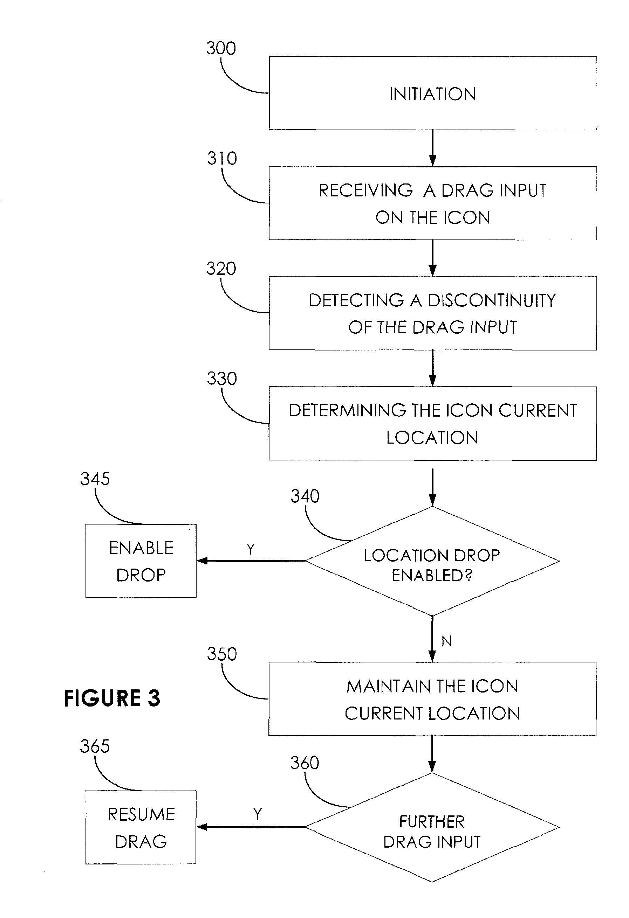

FIG. 3 is a flowchart illustrating another embodiment of the present method. Flowchart of FIG. 3 will be described in relation with examplary illustrations of FIGs. 5 showing a suspension of a drag and drop to enable the use of the sliding element. The present drag and drop operation is implemented on the mobile device through its processor 110 as seen in FIG. 1.

In an initiation act 300, the user may download the transfer application or a relevant plugin in order to enable his mobile device with the present suspension of the drag and drop operation. Using the illustration of the transfer application, the download may be performed from the swoop server 212 of FIGs. 2A, 2B or 2C. The initiation act 300 may further comprise the registration of the target end points. The registration allow the association between a swooper device like mobile device 200 and swoopees like target end points 231, 232 and 233 in FIGs. 2, or friends from one or more social networks. Registration or listing of the end points may comprise information such as name of the device, rank, status (enabled/disabled), device type when the end point is a physical device (tablet, smartphone, laptop or desktop computer, IP TV, high definition TV ...), supported media formats (MPEG, AVI ...)

In an alternative embodiment of the present method, the suspension of the drag and drop may be implemented at the Operating System (OS) level, like the known drag and drop operation available on a Microsoft Windows™ desktop.

Going back to the exemplary embodiment of the transfer application, the initiation act 300 may further comprise the display of a GUI as illustration in FIG. 5A, wherein the icon of a media content 510 is enabled to be dragged and dropped onto a selected one of the target icons 501 to 503. As mentioned before, such an operation will may cause the mobile device displaying the GUI to transfer the media content corresponding to icon 510 to the end point represented by the selected target icon.

As in FIG. 4A, only a small number of target icons is represented, presently 3 in a sliding/scrowling element 520. In the illustration of FIGs. 5A to 5E, more target icons are accessible through this sliding bar 520. Thanks to the present suspension of the drag and drop, the user will be able to access the hidden target icon even after starting a drag input onto the media content icon 510.

In a further act 310, the user will provide a drag input onto the icon 510 in the direction 525 towards any one of the end point icons visible in the sliding bar 520. This drag input will trigger updates to the GUI to displace the icon 510 with the drag input.

In a further act 320, the processor of the mobile device will detect an interruption, i.e. a discontinuity, of the user's drag input as seen in FIG. 5B. The discontinuity may be caused by the user upon realizing that the right target icon is not available on the GUI of FIG. 5A. Consequently he needs to operate the sliding bar 520 to change the displayed target icons. This is shown in FIG. 5B where the user's finger is moved away from the media content icon and the mobile device GUI and in FIG. 5C where the user puts his finger on the left side of the sliding element 520 to further operate it to the right (FIG. 5C). The discontinuity will cause the processor to perform the subsequent acts 330 to 350 that enables the suspension of the drag and drop according to the present method.

In a further act 330, the processor of the mobile device will determine the current location of the media content icon 510 at the moment the user released the drag input, i.e. at the moment of the discontinuity of the drag input.

The icon current location helps determine the type of graphical area where the discontinuity occurred. In the present system, there are two types of graphical areas in the GUIs of FIGs. 5:
- the graphical area of the first type, where a drop is authorized or enabled,
- the graphical area of the second type, where the drop is not authorized or not enabled.

The types of graphical areas (or elements) actually correspond to valid and invalid drop areas as known in existing solutions. A valid drop area or element is a GUI area where drop is enabled by the system. Generally a drop is enabled when the dragged object or icon can be dropped onto an area/element displaying a target icon as the association of the dragged object and the target of the drop corresponds to a predefined action managed by the processor of the electronic device. For instance, a drag and drop of a mail icon onto an mail archive icon will cause the processor to store the mail (represented by the mail icon) into the archive directory (represented by the mail archive icon). When the association of the dragged element and the target of the drop does not correspond to such a predefined and/or action, the drop will not be enabled or allowed. The corresponding GUI area or element is then said to be an invalid drop area or element. Going back to FIG. 4E, the wrong way sign 415 is a visual feedback to the user to say that the drop at this location of the GUI of FIG. 4E is not enabled as it corresponds to an invalid area (here due to incompatibility of the file represented by the dragged icon with the end point behind the icon object of the drop).

More generally, invalid drop areas may correspond to graphical areas of the GUI where no action is identied for a drop of the (file represented by the) dragged icon, or that the drop will return an error message. Examples of such invalid drop areas may be:
- a menu bar or a scrowling bar e.g. in a mail software interface, where no action is defined for a drop,
- between two incompatible objects, when for instance a user tries to drop the icon of an executable file onto another software icon, or with the drop of a file onto an icon of a software that cannot support the file format as an input. In these examples, either the incompatibility is checked at the time of the drop before executing any action between the two elements, or the execution of a predefined action (like the execution of the software associated with the drop target using the file corresponding to the dropped icon as an input file) returns an error message.

In the present system, the GUI areas or elements valid for a drop will correspond to the first type of graphical areas, while the areas or elements invalid for a drop will correspond to the second type of graphical areas.

In an additional embodiment of the present method, the types of graphical areas may be preset. Indeed, at the time the GUI is generated, each graphical area of the GUI may be tagged with the first or second type, the suspension will then be based, as seen here after, on the predefined type. This may enable the developer of an application or a GUI to implement his own rules for defining where a drop is valid and where it is not, so as to control the areas of suspension. This implementation will nevertheless be limited to cases where is drop is not based on a compatibility check of the dragge object with the object of the drop. Indeed, the test takes into account the nature of the dragged object (or the file it represents) and consequently the result of the test will depend upon the choice of dragged object.

In a further act 340, the processor will determined wether the discontinuity location belongs to a graphical area where a drop is not enabled or invalid. Provided discontinuity location belongs to an area valid for a drop (answer Yes to act 340, i.e. graphical element of the first type), the processor will carry on with act 345 and perform the drop and subsequently the action(s) defined between the dragged icon and the target of the drop. Provided the drop is invalid (answser No to act 340, i.e. graphical element of the second type), the processor will maintain the icon 510 current location (act 350), to start what is referred to in this description as the suspended state.

In existing solutions, trying to drop a file on an invalid drop area will cause the processor to return the icon to its initial position. Displacing an icon in the Windows ™ desktop to a free space (see illustration of FIG. 4E with the icon 410 moved to location 411) may give the user the impression that the displaced icon is in a suspended state as in the present method. Actually his action is a drop on a valid drop area as in the known implementation of the Windows™ desktop, most of the desktop areas are drop enabled.

As mentioned before, the types of graphical areas may be preset. Alternatively, the determination of the type of graphical element may be done with the location determination (act 330 in FIG. 3). Using that approach, there is no need to map the entire GUI prior to knowing where the discontinuity of the drop may occur.

In an additional embodiment of the present method, the suspended icon 510 when maintained in its current location may be associated to a selectable graphical element 530 as seen in GUIs of FIG. 5B to 5D and 5F-5G. This selectable graphical element 530, illustrated as a star shaped pictogram in FIGs. 5, is a visual indication to the user on the GUI that the media content icon 510 is currently in its suspended state. In a additional element of the present method, the selectable graphical element 530 may further be configured to cancel the suspended state. To do so, the processor of the mobile device 200 is configured to return the suspended icon 510 to its initial position when a user input is received on the selectable element 530. This is illustrated in FIG. 5F where the user's finger provides a touch input on the selectable graphical element 530 and the icon is moved back in FIG. 5G to its initial position as in the initial GUI of FIG. 5A.

Thanks to the present suspension of the drag and drop operation, the user will enjoy additional control over a GUI. This may be enabled by keeping the suspended icon in its current location even when another user input is received in a location distinct from the icon location. In a additional embodiment of the present method, the suspended icon may even be kept visible, e.g. when the user is moving other objects around the suspended icon. This gained control is illustrated in FIGs. 5C to 5E, where the user starts to operate the sliding element 520 from left to right (FIG. 5C) after suspension of the drag and drop of the media content icon 510 (illustrated with the selectable graphical element 530). FIG. 5D shows further operating of the sliding element 520 to the right, as further target icons 504 and 505 appears, and the previously visible icons 503 and 502 disapear to the right.

In the present system, the drag of the media content icon 530 may be resumed at any time. To that effect, when further drag input is detected by the processor on the media content icon 510 in an additional act 360 of FIG. 3, the displacement of the icon 510 is resumed with the detected further drag inputs (act 365). This is illustrated in FIG. 5E, where the user, after moving the sliding bar 520 to the right position so as to show target icon 505, can resume the displacement of the media content icon 510 by simply starting a drag input onto this icon and move his finger towards target icon 505 for a subsequent drop.

The present embodiments were illustrated mostly using reference to touch inputs on a touch interface. The presents teaching may easily be implemented using a pointing device like a mouse or a stylus. The present embodiments were also illustrated using reference to drag and drop of media content. The present teachings may be easily implemented to any type of graphical element to be dragged and dropped onto a target icon.

Finally, the above discussion is intended to be merely illustrative of the present system and should not be construed as limiting the appended claims to any particular embodiment or group of embodiments. Thus, while the present system has been described with reference to exemplary embodiments, including user interfaces, it should also be appreciated that numerous modifications and alternative embodiments may be devised by those having ordinary skill in the art without departing from the broader and intended spirit and scope of the present system as set forth in the claims that follow.

The section headings included herein are intended to facilitate a review but are not intended to limit the scope of the present system. Accordingly, the specification and drawings are to be regarded in an illustrative manner and are not intended to limit the scope of the appended claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements ;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise;
h) no specific sequence of acts or steps is intended to be required unless specifically indicated; and
i) the term "plurality of" an element includes two or more of the claimed element, and does not imply any particular range of number of elements; that is, a plurality of elements may be as few as two elements, and may include an immeasurable number of elements.

## Claims

1. A method for dragging and dropping an icon within a graphical user interface (GUI), the GUI comprising at least graphical areas of two types:
- a first type of graphical area where a drop is enabled,
- a second type of graphical area where a drop is not enabled,
the method comprising, after detection of a drag input on the icon from the user causing the icon to be displaced in the GUI with said drag input:
- detecting discontinuity of the drag input,
- determining the icon current location in the GUI at the moment the discontinuity occurred,
- maintaining the icon current location if the discontinuity location belongs to a graphical area of the second type.

2. The method of claim 1, wherein the type of a graphical area is predefined.

3. The method of claim 1, wherein the determination of the location further comprises the determination of the type of the graphical area the discontinuity location belongs to.

4. The method of claim 1, further comprising:
- associating the icon when maintained in its current location to a selectable graphical area in the GUI.

5. The method of claim 4, further comprising:
- returning the icon to its initial position when receiving a user input on the selectable area.

6. The method of claim 1, further comprising, when the icon is maintained in its current location:
- receiving another user input on the GUI in a location distinct from the icon location.
- keeping the icon in its maintained location.

7. The method of claim 1, further comprising:
- resuming the displacement of the icon when detecting a further drag input on said icon.

8. An electronic device for for dragging and dropping an icon within a graphical user interface (GUI) rendered on said electronic device, the GUI comprising at least graphical areas of two types:
- a first type of graphical area where a drop is enabled,
- a second type of graphical area where a drop is not enabled,
the electronic device being arranged, after detection of a drag input on the icon from the user causing the icon to be displaced in the GUI with said drag input, to:
- detect discontinuity of the drag input,
- determine the icon current location in the GUI at the moment the discontinuity occurred,
- maintain the icon current location if the discontinuity location belongs to a graphical area of the second type.

9. A program product stored on a non-transitory computer-readable storage medium, and executable by a computer in the form of a software agent including at least one software module setup to implement the method according to claims 1 to 7.
